# EUROPÄISCHE PATENTSCHRIFT

(11) **EP 4 133 022 B1**
(45) Veröffentlichungstag und Bekanntmachung des Hinweises auf die Patenterteilung: **15.10.2025**
(21) Anmeldenummer: 21721405.5
(22) Anmeldetag: 08.04.2021
(51) Int. Cl.: C09J 9/00, C09J 103/02, C08K 5/098

(54) **KLEBSTOFFZUSAMMENSETZUNG FÜR EINEN KLEBESTIFT**
ADHESIVE COMPOSITION FOR A GLUE STICK
COMPOSITION ADHÉSIVE POUR BÂTON DE COLLE

(30) Priorität: 08.04.2020 DE 102020109777
(43) Veröffentlichungstag der Anmeldung: 15.02.2023
(73) Patentinhaber: UHU GmbH & Co. KG, 77815 Bühl (Baden) (DE)
(72) Erfinder: HERRLICH, Timo, 77815 Bühl (DE); GELLINGS, Seda, 77815 Bühl (DE); ZIMMER, Bernd, 77815 Bühl (DE); WALTHER, Frank, 77815 Bühl (DE); SCHNIEDENHARN, Ralf, 77815 Bühl (DE)
(74) Vertreter: advotec.
(86) Internationale Anmeldenummer: PCT/EP2021/059124
(87) Internationale Veröffentlichungsnummer: WO 2021/204917

(56) Entgegenhaltungen:
- WO-A1-2010/103074
- DE-A1- 4 125 122
- US-A1- 2009 312 472

## Beschreibung

Die vorliegend Erfindung betrifft eine Klebstoffzusammensetzung für einen Klebestift, gemäß Anspruch 1, enthaltend mindestens ein klebeaktives Polymer, mindestens ein Natriumsalz einer gesättigten Fettsäure sowie Wasser.

Derartige Klebestifte finden seit vielen Jahren eine breite Anwendung im Bereich der Papier- und Bastelklebstoffe. Dies liegt nicht zuletzt an den vielfältigen positiven Eigenschaften wie der einfachen und zumeist in der Theorie präzisen und verlustfreien Applizierbarkeit und der sauberen Rückdrehbarkeit in einen wiederverschließbaren, meist zylinderförmigen Container. Bei der Klebstoffzusammensetzung allgemein bekannter Klebestifte handelt es sich in der Regel um eine wässrige Zubereitung wasserlöslicher klebeaktiver Polymere in Verbindung mit einem formgebenden Gerüstbildner. Üblicherweise werden auch Feuchthaltemittel und/oder Weichmacher zur Verbesserung des Abriebs, der offenen Zeit und der Lagerstabilität zugesetzt. Als klebeaktive Polymere werden synthetische und natürliche Substanzen wie Polyvinylpyrrolidon, wässrige Polyacrylate, Polyvinylalkohole sowie native Stärken und Stärkederivate verwendet. Als Gerüstbildner finden heute überwiegend Na-Seifen gesättigter aliphatischer Fettsäuren ihre Anwendung. Seit 1968 werden derartige Seifengele in DE-PS1811466 für die Anwendung in Klebestiften beschrieben. Das in der Praxis am häufigsten verwendete System zur Gerüstbildung ist der Einsatz eines Na-Seifengels aliphatischer, gesättigter C14-C18 Fettsäuren, was auch in EP1102824, EP0596958 und EP3174927 beschrieben wird. Verseifte ungesättigte Fettsäuren finden als Gerüstbildner bislang keinen Einsatz, da diese keine stabile Form ergeben und bei Raumtemperatur dauerhaft flüssig bleiben.

Als Feuchthaltemittel und Weichmacher werden mehrwertige Alkohole wie z.B. Sorbit, Mannit, Glycerin, Propylenglykol, Polyethylenglykole sowie auch Saccharose (EP22675858, WO2014/110357) verwendet.

US 2009/312472 A1 offenbart eine Klebstoffzusammensetzung für einen Klebestift mit einem klebeaktiven Polymer sowie einer Mischung aus zwei oder mehreren Natriumsalzen von Fettsäuren und Wasser. Bei den Fettsäuren handelt es sich beispielsweise um Natriumstearat, Natriumpalmitat, Natriummyristat oder Natriumlaurat.

WO 2010/103074 A1 beschreibt, dass Kaliumsalze von Fettsäuren in Klebstoffzusammensetzungen verwendet werden können.

Allen bekannten Klebestiften gemeinsam ist, dass der Klebeerfolg in direktem Zusammenhang mit der Menge des aufgetragenen Klebstoffs und damit der Weichheit des Klebestifts steht. Um einen ausreichenden Klebstoffauftrag zu erhalten, ist es notwendig einen ausreichend hohen Abrieb des Klebestifts einzustellen, welcher einerseits durch einen erhöhten Anteil an klebeaktivem Polymer und andererseits durch erhöhten Einsatz von Weichmachern und/oder Feuchthaltemitteln erzielt wird. Im Widerspruch zu einem guten Klebstoffauftrag steht die Formstabilität, welche nur durch ausreichend harte und feste Formulierungen mittels fester und stabiler Gerüstbildner zu erzielen ist. Genannte technische Unvereinbarkeit zwischen Härte und ausreichendem Abrieb setzt heutige Formulierungen vor einen engen Kompromiss zwischen Stabilität und optimaler Klebeleistung.

Der vorliegenden Erfindung liegt die Aufgabe zugrunde, eine Klebstoffzusammensetzung für Klebestifte zur Verfügung zu stellen, mit welcher das Gleitverhalten auf Papier verbessert und die Klebeeffizienz erhöht werden kann, ohne die Formstabiliät des Stiftes zu verschlechtern.

Diese Aufgabe wird erfindungsgemäß durch eine Klebstoffzusammensetzung mit den Merkmalen des Anspruchs 1 gelöst, welche dadurch gekennzeichnet ist, dass sie mindestens ein Salz einer ungesättigten Fettsäure und/oder mindestens ein Kaliumsalz einer gesättigten Fettsäure enthält.

Es hat sich überraschenderweise herausgestellt, dass der anteilige Einsatz sowohl von verseiften, ungesättigten Fettsäuren als auch von Kaliumseifen gesättigter Fettsäuren in einer Klebstoffzusammensetzung für Klebestifte deren Gleitverhalten auf Papier verbessert, ohne die Formstabilität des Stiftes zu verschlechtern, und einen homogeneren und verlustfreieren Klebstoffauftrag ermöglicht. Außerdem wurde gefunden, dass durch den Einsatz oben genannter Fettsäuren aufgrund des verbesserten Auftragsverhaltens die Klebeeffizienz erhöht wird.

Bei einer bevorzugten Ausführungsform der erfindungsgemäßen Klebstoffzusammensetzung handelt es sich bei dem Salz einer ungesättigten Fettsäure um das Salz einer einfach oder mehrfach ungesättigten Fettsäure, insbesondere mit einer Kettenlänge von C14:x - C20:x mit x = 1-3, vorzugsweise um das Salz von der Ölsäure und/oder Linolsäure. Mit "x" wird vorliegend die Anzahl von Doppelbindungen definiert. Diese Fettsäuresalze haben sich als besonders effizient im Hinblick auf Klebeeffizienz und Gleitverhalten erwiesen.

Mit Vorteil handelt es sich bei dem Natriumsalz einer gesättigten Fettsäure um das Natriumsalz einer gesättigten Fettsäure mit einer Kettenlänge von C12 bis C22, vorzugsweise C14 bis C18. Diese Salze haben sich als besonders vorteilhaft im Hinblick auf die Formstabilität erwiesen.

In der Regel beträgt der Anteil an dem mindestens einen Salz einer ungesättigten Fettsäure und/oder dem mindestens einen Kaliumsalz einer gesättigten Fettsäure ca. 0,1 Gew.-% bis ca. 3 Gew.-%, vorzugsweise ca. 0,3 Gew.-% bis ca. 1 Gew.-%.

Der Anteil an dem mindestens einen Salz einer ungesättigten Fettsäure und/oder an dem mindestens einen Kaliumsalz einer gesättigten Fettsäure bezogen auf die Gesamtmenge aller enthaltenen Fettsäuren und/oder Fettsäuresalze beträgt 5 bis 20 Gew.-%

Bei dem klebeaktiven Polymer handelt es sich um Stärke und/oder Stärkederivat, wobei der Anteil an klebeaktivem Polymer vorzugsweise ca. 10 Gew.-% bis ca. 30 Gew.-%, insbesondere ca. 15 Gew.-% bis ca. 25 Gew.-% beträgt.

In der Regel beträgt der Anteil an dem Natriumsalz einer gesättigten Fettsäure ca. 3 Gew.-% bis ca. 10 Gew.-%, vorzugsweise ca. 4 Gew.-% bis ca. 6 Gew.-%. Bei diesen Bereichen ist ein besonders formstabiler Stift herstellbar.

In der Regel beträgt der Anteil an Wasser ca. 40 Gew.-% bis ca. 70 Gew.-%, vorzugsweise ca. 50 Gew.-% bis ca. 68 Gew.-%.

Vorzugsweise ist mindestens ein Feuchthaltemittel und/oder Weichmacher enthalten, insbesondere ausgewählt aus der Gruppe von Glycerin, Sorbitol, Proplyenglycol, Saccharose und polyfunktionellen Alkoholen, wobei der Anteil an Feuchthaltemittel und/oder Weichmacher vorzugsweise ca. 2 Gew.-% bis ca. 25 Gew.-%, insbesondere ca. 6 Gew.-% bis ca. 15 Gew.-% beträgt.

Vorzugsweise ist die erfindungsgemäße Klebstoffzusammensetzung im Wesentlichen frei von organischen Lösungsmitteln, insbesondere frei von Lösungsmitteln mit einem Siedepunkt von unter 200°C.

In der erfindungsgemäßen Klebstoffzusammensetzung kann mindestens ein pH-Indikator, insbesondere ein pH-Indikator mit einem Umschlagsbereich von pH 7 bis pH 11 vorhanden sein, wobei der pH-Indikator vorzugsweise mit einem Anteil von weniger als 0,3 Gew.-% enthalten ist.

In der erfindungsgemäßen Klebstoffzusammensetzung können weitere Additive aus der Gruppe von Konservierungsmitteln, Duftstoffen, Pigmenten, Antioxidantien, Bleichmitteln und Entschäumer enthalten sein. Diese Additive sind in der Regel in Mengen von maximal ca. 2 Gew.-% in der erfindungsgemäßen Klebestoffzusammensetzung enthalten.

Bei der bereits oben genannten Stärke kann es sich beispielsweise um Kartoffel- und/oder Mais- und/oder Erbsen- und/oder Tapiokastärke und/oder Derivate davon handeln.

Die vorliegende Erfindung betrifft ferner einen Klebestift, enthaltend eine Klebstoffzusammensetzung nach einem der Ansprüche 1 bis 13.

Eine erfindungsgemäße Klebstoffzusammensetzung bzw. ein erfindungsgemäßer Klebestift kann beispielsweise so hergestellt werden, dass die darin enthaltenen Fettsäuresalze (Seifen) bereits als solche zugegeben werden. Es können jedoch auch die gewünschten Fettsäuren mit entsprechenden Verseifungsreagenzien (z. B. NaOH, KOH etc.) gemischt werden, so dass die entsprechenden Seifen durch Umsetzungen der Fettsäuren mit den entsprechenden Basen erfolgt.

### Beispiele:

### Herstellung erfindungsgemäßer Klebestifte:

Die Komponenten entsprechend Tabelle 1 werden bei 75-85°C gemischt. Durch Alkalisierung werden die Fettsäuren verseift. Um die Masse luftblasenfrei zu bekommen, wird diese unter Vakuum für einige Minuten gerührt. Abschließend wird die heiße Mischung in Klebestiftformlinge gegossen. Nach dem Abkühlen erstarrt die so hergestellte Klebstoffzusammensetzung zu Klebestiften.

### Formulierungen:

| Klebestiftformulierungen Farbe: weiß | Beispiel 1 (Vgl.)¹⁾ | Beispiel 2 (Vgl.) | Beispiel 3 (Erf.) | Stand der Technik (Vgl) | Beispiel 4 (Erf.) | Beispiel 5 (Erf.) |
|---|---|---|---|---|---|---|
| Klebeaktive Polymere (Stärke/mod. Stärke) | 20,8 | 25,5 | 20,8 | 23,3 | 20,8 | 21,3 |
| Gesättigte Fettsäuren C14-C18 | - | 4,3 | 4,6 | 5,7 | 4,6 | 4,6 |
| techn. Oleinsäure C18:1-3 | 4,3 | - | 0,5 | - | 0,5 | - |
| Saccharose | - | - | - | 15 | 15 | - |
| Glycerin | 10 | 10 | 10 | - | - | 10 |
| Natriumhydroxid | 0,9 | 0,9 | 1,0 | 1,4 | 1,0 | 0,9²⁾ |
| Caprolactam | | - | - | 1,0 | - | - |
| Hilfsstoffe | | 0,3 | 0,3 | 0,3 | 0,3 | 0,3 |
| Wasser | | 59 | 62,8 | 53,3 | 57,8 | 62,9 |

| | | | | | | |
|---|---|---|---|---|---|---|
| ¹⁾ Stickmasse wird nicht fest ²⁾ 85 Gew.-% NaOH + 15 Gew.-% KOH | | | | | | |

**Tabelle 1**

| Blaue, selbstentfärbende Klebestiftformulierungen | Beispiel 6 (Vgl) | Beispiel 7 (Erf) |
|---|---|---|
| Klebeaktive Polymere (Stärke/mod. Stärke) | 20,8 | 20,8 |
| Gesättigte Fettsäuren C14-C18 | 4,6 | 4,6 |
| techn. Oleinsäure C18:1-3 | - | 0,3 |
| Saccharose | - | - |
| Glycerin | 10 | 10 |
| Natriumhydroxid | 1,1 | 1,1 |
| ThymolpHthalein | 0,1 | 0,1 |
| Caprolactam | - | - |
| Hilfsstoffe | 0,3 | 0,3 |
| Wasser | 63,1 | 62,8 |

### Vergleichstests

Sämtliche Vergleichstests wurden unter konstanten Prüfbedingungen durchgeführt. Die Klebestifte und Prüfmaterialien wurden dazu vor Prüfbeginn für 24 h bei 20 °C / 65% r.F. temperiert.

### Abrieb:

Es wird der Gewichtsverlust ermittelt, welcher durch maschinelles Abfahren der Klebemasse über eine Papierbahn definierter Länge unter konstanter Belastung erfolgt.

Der Klebestift wird vor der Messung ca. 0,5 cm herausgedreht und mit einem Messer abgeschnitten um eine Vergleichbarkeit zu gewährleisten. Wenn sich während der Messung Klebstoffklümpchen am Hülsenrand bilden oder Klümpchen auf dem Papier abbrechen werden diese nur als Verlustmasse berücksichtigt. Dadurch ist gewährleistet, dass nur der tatsächlich auf das Papier applizierte Klebstoff berücksichtig wird. Das Ergebnis ergibt sich als arithmetischer Mittelwert aus fünf Einzelmessungen.
Prüfgeschwindigkeit: 0,5 m/sec
Prüfdistanz: 1 m
Gesamtgewicht: 700 g

### Druckfestigkeit:

Die Druckfestigkeit ist definiert als der vom Klebestift maximal tolerierte Kraft Fmax in N unter Druckbelastung vor dem Zusammenbrechen. Die Druckfestigkeit wird mittels einer Zwick, Modell Z2.5 geprüft. Die Sticksäule (Durchmesser 22 mm bei 21g, bzw. 16 mm bei 8,2 g) wird dazu mit einer Mindestlänge von 30 mm zwischen den Pressbacken arretiert. Die Vorschubgeschwindigkeit beträgt 70 mm/min. Der Wert mit dem größten Druck wird anhand des Maximums im Graphen bestimmt. Das Ergebnis ergibt sich als arithmetischer Mittelwert aus fünf Einzelmessungen.

### Klebeeffizienz:

Die Klebeeffizienz ist definiert über die Anzahl der notwendigen Applikationen für eine erfolgreiche Verklebung und der dazu notwendigen Klebstoffmenge um einen Papierbogen entlang der langen Seite mit der gegenüberliegenden Seite zu einer Schlaufe zu verkleben. Dazu wird maschinell mittels der oben beschriebenen Abriebmethode Klebstoff auf das Papier entlang der langen Kante (29 cm) aufgetragen. Danach wird maschinell unter konstantem Anpressdruck (Abrollmaschine) und konstanter Abrollgeschwindigkeit direkt mit der gegenüberliegenden Seite zu einer Schlaufe verklebt.

Verklebt werden insgesamt 30 Papierbögen (DIN A4) je Klebstoffformulierung. Papierbögen DIN A4 von MAESTRO mondi color lindengrün, 160 g/m².

Geht die Schlaufe innerhalb von 5 Sekunden wieder auf, so wird die Verklebung solange wiederholt bis eine erfolgreiche Verklebung erreicht wird. Die insgesamt verbrauchte Klebstoffmenge ist direkt proportional zur Klebeeffizienz. Der Klebeerfolg entspricht dem Anteil der 30 Bögen die nach den mind. 5 Sekunden weiterhin halten.

### Manuelle Papieranzugswerte:

Bei der Bestimmung der Papieranzugswerte wird die Zeitspanne zwischen Klebemasseauftrag und Papierriss ermittelt. Die Klebstoffmasse wird ca. 0,5 cm herausgedreht und mit einem Messer abgeschnitten, um eine glatte Oberfläche zu erhalten. Auf einem definierten Prüfstreifen wird mittig 1x von links nach rechts Klebemasse aufgetragen und ein zweiter Prüfstreifen deckungsgleich durch Fingerdruck angepresst. Sofort wird eine Stoppuhr betätigt. Nun werden die Prüfstreifen gleichmäßig bis zum Papierriss auseinander gezogen und die Zeit bestimmt. Das Ergebnis ergibt sich als arithmetischer Mittelwert aus fünf Einzelmessungen.

### Testergebnisse:

| Stickgröße: 21 g | Beispiel 1 Vgl.¹⁾ | Beispiel 2 (Vgl.) | Beispiel 3 (Erf.) | StdT (Vgl) | Beispiel 5 (Erf.) |
|---|---|---|---|---|---|
| Abrieb [mg/m] | n.b. | 119 | 138 | 117 | 121 |
| Druck-festigkeit [N] | n.b | 63 | 79 | 72 | 93 |
| Papieranzug [s] | n.b. | 17 | 17 | 45 | 15 |
| Fazit: | Formulierung mit ausschließlich ungesättigten Fettsäuren bleibt flüssig | Standardqualität | Erhöhte Druck-festigkeit trotz erhöhtem Abrieb | Standardqualität | Erhöhte Druckfestigkeit bei vergleichbarem Abrieb |

**Tabelle 2**

| Stickgröße: 21 g | Beispiel 6 (Vgl) | Beispiel 7 (Erf) |
|---|---|---|
| Abrieb [mg/m] | 84 | 122 |
| Druckfestigkeit [N] | 72 | 71 |
| Papieranzug [s] | 20 | 20 |
| Fazit: | Standardqualität | Erhöhter Abrieb bei gleicher Druckfestigkeit |

**Tabelle 3**

| Stickgröße: 8,2g | Beispiel 2 (Vgl.) | Beispiel 3 (Erf.) | Stand der Technik (Vgl) |
|---|---|---|---|
| Abrieb (mg/m) | 147 | 150 | 400 |
| Druckfestigkeit | 33 | 42 | 23 |
| Papieranzug | 17 | 17 | 45 |
| Fazit: | Standardqualität | Verbesserte Druckfestigkeit bei vergleichbarem Abrieb | Sehr weicher Stick mit schlechter Druckstabilität |

### Differenzierter Abrieb:

**Tabelle 4**

| | Beispiel 2 (Vgl.) | Beispiel 3 (Erf.) | Stand der Technik (Vgl) |
|---|---|---|---|
| Stickgröße | 21 g | 21 g | 21 g |
| Netto-Abrieb (mg/m) | 99 ± 7 | 138 ± 8 | 83 ± 10 |
| Gesamtabrieb (inkl. Fussel/Brocken auf Papier oder an Abriebskante des Stick [mg/m] | 119 ± 9 | 138 ± 8 | 117 ± 12 |
| Differenz Abrieb [mg/m] = Fussel/Brocken =Verlustmasse bzw. unsauberes Auftragsbild | 20 | 0 | 40 |
| Fazit: | unsauber bzw. schmiert und zieht Fäden | saubere Anwendung | unsauber bzw. schmiert und zieht Fäden |

### Klebeeffizienz: [g/30 Bögen/5 sec]

**Tabelle 5**

| | Beispiel 2 (Vgl.) | Beispiel 3 (Erf.) | Stand der Technik (Vgl) |
|---|---|---|---|
| Gesamtverbrauch [g/30 Bögen] = Klebeeffizienz | 2,25 | 1,367 | 1,621 |
| Anzahl der Anwendungen bis Verklebung für mind. 5 Sekunden hält | 56 | 30 | 42 |
| Verklebungen (x) die nach 5 Sekunden wieder aufgehen | 2 | 0 | 11 |
| Erfolgsrate [(x-30)/30 in %] | 93 | 100 | 63 |

Fazit: Gleichmäßiger und verlustfreier Abrieb wirkt positiv auf den Gesamtverbrauch, da wenig nachappliziert werden muss.

Wie aus Tabelle 2 hervorgeht, war es bei der Zusammensetzung gemäß Beispiel 1 nicht möglich, einen Klebestift herzustellen, da diese Klebstoffzusammensetzung nicht fest wurde. Der Grund dafür ist darin zu sehen, dass keine gesättigten Fettsäuren vorhanden waren.

Wie aus den Tabellen 2 und 3 weiter hervorgeht, konnten mit den erfindungsgemäßen Zusammensetzungen gemäß den Beispielen 3, 5 und 7 die besten Ergebnisse im Hinblick auf Abrieb/Druckfestigkeit erzielt werden.

Wie aus der Tabelle 4 hervorgeht, wurden mit der erfindungsgemäßen Zusammensetzung gemäß Beispiel 3 im Vergleich zu den Beispielen 2 und der Zusammensetzung aus dem Stand der Technik Verbesserungen hinsichtlich des Nettoabriebes erzielt.

Wie aus Tabelle 5 hervorgeht, werden auch im Hinblick auf die Klebeeffizienz mit der erfindungsgemäßen Zusammensetzung gemäß Beispiel 3 die besten Ergebnisse erzielt.

## Patentansprüche

1. Klebstoffzusammensetzung für einen Klebestift, enthaltend mindestens ein klebeaktives Polymer in Form von Stärke und/oder Stärkederivat, mindestens ein Natriumsalz einer gesättigten Fettsäure sowie Wasser, **dadurch gekennzeichnet, dass** sie ferner mindestens ein Salz einer ungesättigten Fettsäure und/oder mindestens ein Kaliumsalz einer gesättigten Fettsäure enthält, wobei der Anteil an dem mindestens einen Salz einer ungesättigten Fettsäure und/oder an dem mindestens einen Kaliumsalz einer gesättigten Fettsäure 5 Gew.-% bis 20 Gew.-% bezogen auf die Gesamtmenge aller enthaltenen Fettsäuren und/oder Fettsäuresalze beträgt.

2. Klebstoffzusammensetzung nach Anspruch 1, **dadurch gekennzeichnet, dass** es sich bei dem Salz einer ungesättigten Fettsäure um das Salz einer einfach oder mehrfach ungesättigten Fettsäure handelt.

3. Klebstoffzusammensetzung nach Anspruch 2, **dadurch gekennzeichnet, dass** es sich bei dem Salz einer ungesättigten Fettsäure um das Salz einer einfach oder mehrfach ungesättigten Fettsäure mit einer Kettenlänge von C14: x - C20: x mit x = 1 - 3 handelt.

4. Klebstoffzusammensetzung nach Anspruch 3, **dadurch gekennzeichnet, dass** es sich bei dem Salz einer ungesättigten Fettsäure um das Salz von Ölsäure und/oder von Linolsäure handelt.

5. Klebstoffzusammensetzung nach einem der Ansprüche 3 oder 4, **dadurch gekennzeichnet, dass** es sich bei dem Natriumsalz einer gesättigten Fettsäure um das Natriumsalz einer gesättigten Fettsäure mit einer Kettenlänge von C12 - C22 handelt.

6. Klebstoffzusammensetzung nach einem der vorhergehenden Ansprüche, **dadurch gekennzeichnet, dass** der Anteil an dem mindestens einen Salz einer ungesättigten Fettsäure und/oder dem mindestens einen Kaliumsalz einer gesättigten Fettsäure 0,1 Gew.-% bis 3 Gew.-% beträgt.

7. Klebstoffzusammensetzung nach einem der vorhergehenden Ansprüche, **dadurch gekennzeichnet, dass** es sich bei dem klebeaktiven Polymer um Kartoffelstärke und/oder Maisstärke und/oder Erbsenstärke und/oder Tapiokastärke und/oder deren Derivate handelt, wobei der Anteil an klebeaktivem Polymer in der erfindungsgemäßen Klebstoffzusammensetzung 10 Gew.-% bis 30 Gew.-% beträgt.

8. Klebstoffzusammensetzung nach einem der vorhergehenden Ansprüche, **dadurch gekennzeichnet, dass** der Anteil an dem Natriumsalz einer gesättigten Fettsäure 3 Gew.-% bis 10 Gew.-% beträgt.

9. Klebstoffzusammensetzung nach einem der vorhergehenden Ansprüche, **dadurch gekennzeichnet, dass** der Anteil an Wasser 40 Gew.-% bis 70 Gew.-% beträgt.

10. Klebstoffzusammensetzung nach einem der vorhergehenden Ansprüche, **dadurch gekennzeichnet, dass** mindestens ein Feuchthaltemittel und/oder Weichmacher, ausgewählt aus der Gruppe von Glycerin, Sorbitol, Propylenglycol, Saccharose und polyfunktionellen Alkoholen enthalten ist, wobei der Anteil an Feuchthaltemittel und/oder Weichmacher 2 Gew.-% bis 25 Gew.-% beträgt.

11. Klebstoffzusammensetzung nach einem der vorhergehenden Ansprüche, **dadurch gekennzeichnet, dass** sie im wesentlichen frei von organischen Lösungsmitteln ist.

12. Klebstoffzusammensetzung nach einem der vorhergehenden Ansprüche, **dadurch gekennzeichnet, dass** mindestens ein pH-Indikator, mit einem Anteil von weniger als 0,3 Gew.-% enthalten ist.

13. Klebstoffzusammensetzung nach einem der vorhergehenden Ansprüche, **dadurch gekennzeichnet, dass** sie weitere Additive aus der Gruppe von Konservierungsmitteln, Duftstoffen, Pigmenten, Antioxidantien, Bleichmitteln und Entschäumer enthält, wobei der Anteil an diesen Additiven maximal 2 Gew.-% beträgt.

14. Klebestift, enthaltend eine Klebstoffzusammensetzung nach einem der Ansprüche 1 bis 13.

## Claims

1. An adhesive composition for a glue stick, the adhesive composition containing at least one adhesive polymer in the form of starch and/or a starch derivative, at least one sodium salt of a saturated fatty acid, and water, **characterized in that** it further comprises at least one salt of an unsaturated fatty acid and/or at least one potassium salt of a saturated fatty acid, the content of the at least one salt of an unsaturated fatty acid and/or the at least one potassium salt of a saturated fatty acid being 5 wt% to 20 wt%, with respect to the total amount of all fatty acids and/or fatty acid salts contained.

2. The adhesive composition according to claim 1, **characterized in that** the salt of an unsaturated fatty acid is the salt of a monounsaturated or polyunsaturated fatty acid.

3. The adhesive composition according to claim 2, **characterized in that** the salt of an unsaturated fatty acid is the salt of a monounsaturated or polyunsaturated fatty acid having a chain length of C14:x-C20:x, wherein x = 1-3.

4. The adhesive composition according to claim 3, **characterized in that** the salt of an unsaturated fatty acid is the salt of oleic acid and/or linoleic acid.

5. The adhesive composition according to any one of claims 3 or 4, **characterized in that** the sodium salt of a saturated fatty acid is the sodium salt of a saturated fatty acid having a chain length of C12-C22.

6. The adhesive composition according to any one of the preceding claims, **characterized in that** the content of the at least one salt of an unsaturated fatty acid and/or the at least one potassium salt of a saturated fatty acid is 0.1 wt% to 3 wt%.

7. The adhesive composition according to any one of the preceding claims, **characterized in that** the adhesive polymer is potato starch and/or corn starch and/or pea starch and/or tapioca starch and/or their derivatives, the content of the adhesive polymer in the adhesive composition according to the invention being 10 wt% to 30 wt%.

8. The adhesive composition according to any one of the preceding claims, **characterized in that** the content of the sodium salt of a saturated fatty acid is 3 wt% to 10 wt%.

9. The adhesive composition according to any one of the preceding claims, **characterized in that** the water content is 40 wt% to 70 wt%.

10. The adhesive composition according to any one of the preceding claims, **characterized in that** it contains at least one humectant and/or plasticizer selected from the group consisting of glycerin, sorbitol, propylene glycol, sucrose, and polyfunctional alcohols, the content of the humectant and/or the plasticizer being 2 wt% to 25 wt%.

11. The adhesive composition according to any one of the preceding claims, **characterized in that** it is essentially free from organic solvents.

12. The adhesive composition according to any one of the preceding claims, **characterized in that** at least one pH indicator is contained in an amount of less than 0.3 wt%.

13. The adhesive composition according to any one of the preceding claims, **characterized in that** it contains further additives from the group consisting of preservatives, fragrances, pigments, antioxidants, bleaching agents, and defoamers, the maximum content of these additives being 2 wt%.

14. A glue stick containing an adhesive composition according to any one of claims 1 to 13.

## Revendications

1. Composition adhésive pour un bâton de colle, la composition adhésive contenant au moins un polymère adhésif sous forme d'amidon et/ou d'un dérivé d'amidon, au moins un sel de sodium d'un acide gras saturé et de l'eau, **caractérisée en ce qu'**elle comprend en outre au moins un sel d'un acide gras insaturé et/ou au moins un sel de potassium d'un acide gras saturé, la teneur en l'au moins un sel d'un acide gras insaturé et/ou en l'au moins un sel de potassium d'un acide gras saturé étant de 5 % en poids à 20 % en poids par rapport à la quantité totale de tous les acides gras et/ou sels d'acides gras contenus.

2. Composition adhésive selon la revendication 1, **caractérisée en ce que** le sel d'un acide gras insaturé est le sel d'un acide gras monoinsaturé ou polyinsaturé.

3. Composition adhésive selon la revendication 2, **caractérisée en ce que** le sel d'un acide gras insaturé est le sel d'un acide gras monoinsaturé ou polyinsaturé ayant une longueur de chaîne de C14 : x-C20 : x, où x = 1-3.

4. Composition adhésive selon la revendication 3, **caractérisée en ce que** le sel d'un acide gras insaturé est le sel de l'acide oléique et/ou de l'acide linoléique.

5. Composition adhésive selon l'une quelconque des revendications 3 ou 4, **caractérisée en ce que** le sel de sodium d'un acide gras saturé est le sel de sodium d'un acide gras saturé ayant une longueur de chaîne de C12-C22.

6. Composition adhésive selon l'une quelconque des revendications précédentes, **caractérisée en ce que** la teneur en l'au moins un sel d'un acide gras insaturé et/ou en l'au moins un sel de potassium d'un acide gras saturé est de 0,1 % en poids à 3 % en poids.

7. Composition adhésive selon l'une quelconque des revendications précédentes, **caractérisée en ce que** le polymère adhésif est de la fécule de pomme de terre et/ou de la fécule de maïs et/ou de la fécule de pois et/ou de la fécule de tapioca et/ou leurs dérivés, la teneur en polymère adhésif dans la composition adhésive selon l'invention étant de 10 % en poids à 30 % en poids.

8. Composition adhésive selon l'une quelconque des revendications précédentes, **caractérisée en ce que** la teneur en sel de sodium d'un acide gras saturé est de 3 % en poids à 10 % en poids.

9. Composition adhésive selon l'une quelconque des revendications précédentes, **caractérisée en ce que** la teneur en eau est de 40 % à 70 % en poids.

10. Composition adhésive selon l'une quelconque des revendications précédentes, **caractérisée en ce qu'**elle contient au moins un humectant et/ou un plastifiant choisi dans le groupe constitué par la glycérine, le sorbitol, le propylène glycol, le saccharose et les alcools polyfonctionnels, la teneur en humectant et/ou en plastifiant étant de 2 % en poids à 25 % en poids.

11. Composition adhésive selon l'une quelconque des revendications précédentes, **caractérisée en ce qu'**elle est essentiellement exempte de solvants organiques.

12. Composition adhésive selon l'une quelconque des revendications précédentes, **caractérisée en ce qu'**au moins un indicateur de pH est contenu en une quantité inférieure à 0,3 % en poids.

13. Composition adhésive selon l'une quelconque des revendications précédentes, **caractérisée en ce qu'**elle contient d'autres additifs choisis dans le groupe constitué par les conservateurs, les parfums, les pigments, les antioxydants, les agents de blanchiment et les agents antimoussants, la teneur maximale de ces additifs étant de 2 % en poids.

14. Bâton de colle contenant une composition adhésive selon l'une quelconque des revendications 1 à 13.
